# EUROPEAN PATENT APPLICATION

(11) **EP 0 924 261 A1**
(43) Date of publication of application: **23.06.1999**
(21) Application number: 98309249.5
(22) Date of filing: 11.11.1998
(51) Int. Cl.: C08L 71/12, C08L 77/00

(54) **Impact modified compositions of compatibilized polyphenylene ether-polyamide resin blends**

(30) Priority: 20.11.1997 US 974940
(71) Applicant: GENERAL ELECTRIC COMPANY, Schenectady, NY 12345 (US); BASF AKTIENGESELLSCHAFT, 67056 Ludwigshafen (DE)
(72) Inventor: Koevoets, Christiaan Henricus, 4707 DJ Roosendaal (NL); Bastiaens, Jozef Herman Peter, 4611 JX Bergen op Zoom (NL); Eersels, Kristof Lode Leo, 4617 NX Bergen op Zoom (NL); Gotz, Walter, 67067 Ludwigshafen (DE); Gottschalk, Axel Wolfgang, Dr., 67435 Neustadt an der Weinstr. (DE)
(74) Representative: Szary, Anne Catherine, Dr.

(57) **Abstract**

The application relates to thermoplastic compositions comprising a compatibilized polyphenylene ether-polyamide resin blend which is modified with an impact modifier containing at least moieties that are reactive with the polyamide resin. The preferred impact modifier is an alkylene-alkyl (meth)acrylate copolymer comprising at least two moieties selected from the group consisting of carboxylic acid, anhydride, epoxy, oxazoline, and orthoester. The compositions of the invention exhibit good physical properties, especially energy at break and deformation when measured at low temperature.

## Description

The invention relates to a thermoplastic composition of a compatibilized polyphenylene ether-polyamide resin blend that is modified with an impact modifier containing at least two moieties that are reactive with the polyamide resin.

The invention also relates to articles formed out of the compositions of the invention.

Poly(phenylene ether) resins (referred to hereafter as "PPE") are commercially attractive materials because of their unique combination of physical, chemical, and electrical properties. Furthermore, the combination of these resins with polyamide resins into compatibilized blends results in additional overall properties such as chemical resistance, high strength, and high flow. Examples of such compatibilized blends can be found in U.S. Patents 4,315,086 (Ueno, et al); 4,659,760 (van der Meer); and 4,732,938 (Grant, et al). The properties of these blends can be further enhanced by the addition of various additives such as impact modifiers, flame retardants, light stabilizers, processing stabilizers, heat stabilizers, antioxidants and fillers.

The physical properties of PPE/polyamide blends make them attractive for a variety of end-use articles in the automotive market, especially for under hood and various exterior components. Many of these components are subjected to a variety of abuses such as impacts and as such require outstanding impact resistance and ductility. These same articles are further subjected to a wide variation in temperature in end-use applications due to the extremes of temperature found in many parts of the world. Accordingly, a need exists for compatibilized PPE-polyamide compositions that have improved impact resistance and ductility over a wide range of temperatures, especially at low temperatures.

The needs discussed above have been generally satisfied by the discovery of an improved thermoplastic composition which comprises:
a) a compatibilized polyphenylene ether-polyamide resin blend, and
b) an alkylene-alkyl (meth)acrylate copolymer comprising at least two moieties selected from the group consisting of carboxylic acid, anhydride, epoxy, oxazoline, and orthoester.

The description which follows provides further details regarding this invention.

Polyphenylene ether resins are a well known class of compounds sometimes referred to as polyphenylene oxide resins. Examples of suitable PPE and processes for their preparation can be found in, for example, U.S. Patent Nos. 3,306,874; 3,306,875; 3,257,357; and 3,257,358. Compositions of the present invention will encompass homopolymers, copolymers and graft copolymers obtained by the oxidative coupling of phenolic compounds. The preferred PPE used as base resins in compositions of the present invention will be comprised of ml/g derived from 2,6-dimethyl phenol. Also contemplated are PPE copolymers derived from 2,6-dimethyl phenol and 2,3,6-trimethyl phenol.

Particularly useful PPE are poly(2,6-dimethyl-1,4-phenylene ether) having an intrinsic viscosity (I.V.) of between about 0.30 and about 0.60 dl/ g as measured in toluene at 25°C. and a concentration of 0.6 gram per 100 ml.

The polyamide resins useful in the practice of the present invention are a generic family of resins known as nylons, characterized by the presence of an amide group (-C(O)NH-). Nylon-6 and nylon-6,6 are the generally preferred polyamides and are available from a variety of commercial sources. Other polyamides, however, such as nylon-4,6, nylon-12, nylon-6,10, nylon 6,9, nylon 6/6T and nylon 6,6/6T with triamine contents below about 0.5 weight percent as well as others, such as the amorphous nylons may be useful for particular PPE-polyamide applications. Mixtures of various polyamides as well as various polyamide copolymers are also useful. The most preferred polyamide for the blends of the present invention is polyamide-6,6.

The polyamides can be obtained by a number of well known processes such as those described in U.S. Patent Nos. 2,071,250; 2,071,251; 2,130,523; 2,130,948; 2,241,322; 2,312,966; and 2,512,606. Nylon-6, for example, is a polymerization product of caprolactam. Nylon-6,6 is a condensation product of adipic acid and 1,6-diaminohexane. Likewise, nylon 4,6 is a condensation product between adipic acid and 1,4-diaminobutane. Besides adipic acid, other useful diacids for the preparation of nylons include azelaic acid, sebacic acid, dodecane diacid, as well terephthalic and isophthalic acids. Other useful diamines include m-xylyene diamine, di-(;aminophenyl)methane, di-(4-aminocyclohexyl)methane; 2,2-di-(4-aminophenyl)propane, and 2,2-di-(4-aminocyclohexyl)propane. Copolymers of caprolactam with diacids and diamines are also useful.

Polyamides having viscosity number of about 90 to about 350 ml/ g, preferably between about 110 and about 240 ml/g as measured in a 0.5 weight percent solution in 96 weight percent sulphuric acid in accordance with ISO 307 is preferred.

In blends of the present invention, a compatibilizing agent should be employed in the preparation of the composition. The two-fold purpose for using compatilizing agents is to improve, in general, the physical properties of the PPE-polyamide resin blend, as well as to enable the use of a greater proportion of the polyamide component. When used herein, the expression "compatibilizing agent" refers to those polyfunctional compounds which interact with either the PPE, the polyamide resin, or both. This interaction may be chemical (e.g. grafting) or physical (e.g. affecting the surface characteristics of the dispersed phases). In either instance the resulting PPE-polyamide composition appears to exhibit improved compatibility, particularly as evidenced by enhanced impact strength, mold knit line strength and/or elongation. As used herein, the expression "compatibilized polyphenylene ether-polyamide base resin" refers to those compositions which have been physically or chemically compatibilized with an agent as discussed above, as well as those compositions which are physically compatible without such agents, as taught in U.S. Pat. No. 3,379,792.

Examples of the various compatibilizing agents that may be employed in the practice of the present invention include: a) liquid diene polymers, b) epoxy compounds, c) oxidized polyolefin wax, d) quinones, e) organosilane compounds, f) polyfunctional compounds and functionalized PPE as described obtained by reacting one or more of the previously mentioned compatibilizing agents with PPE hereinafter.

Liquid diene polymers (a) suitable for use herein include homopolymers of a conjugated diene with at least one monomer selected from the group consisting of other conjugated dienes; vinyl monomer, e.g. styrene and alphamethyl styrene; olefins, e.g. ethylene, propylene, butene-1, isobutylene, hexene-1, octene-1 and dodecene-1, and mixtures thereof, having a number average molecular weight of from 150 to 10,000 preferably 150 to 5,000. These homopolymers and copolymers can be produced by the methods described in, for example, U.S. Pat. Nos. 4,054,612; 3,876,721 and 3,428,699 and include, among others, polybutadiene, polyisoprene, poly(1,3-pentadiene), poly(butadiene-isoprene), poly(styrene-butadiene), polychloroprene, poly(butadiene-alpha methylstyrene), poly(butadiene-styrene-isoprene), poly(butylene-butadiene) and the like.

Epoxy compounds (b) suitable for use in the practice of the present invention include: (1) epoxy resins produced by condensing polyhydric phenols (e.g. bisphenol-A, tetrabromobisphenol-A, resorcinol and hydroquinone) and epichlorohydrin; (2) epoxy resins produced by condensing polyhydric alcohols (e.g.ethylene glycol, propylene glycol, butylene glycol, polyethylene glycol, polypropylene glycol, pentaerythritol and trimethylolethane and the like) and epichlorohydrin, (3) glycidyletherified products of monohydric alcohols and monohydric phenols including phenyl glycidylether, butyl glycidyl ether and cresyl glycidylether; (4) glycidyl derivates of amino compounds for example, the diglycidyl derivate of aniline, and (5) epoxidized products of higher olefinic or cycloalkene, or natural unsaturated oils (e.g. soybean) as well as of the foregoing liquid diene polymers.

Oxidized polyolefin waxes (c) are well known and a description thereof and processes for the production of the same are found in U.S. Pat. Nos. 3,822,227 and 3,756,999. Generally, these are prepared by an oxidation or suspension oxidation of polyolefin. An especially preferred polyolefin wax is "Hoechst Wachs".

Quinone compounds (d) suitable for use herein are characterized as having in the molecule of the unsubstituted derivative at least one six-membered carbon ring; at least two carbonyl groups in the ring structure, both of which may be in the same or, if more than one ring, different rings, provided that they occupy positions corresponding to the 1,2- or 1,4-orientation of the monocyclic quinone; and at least two carbon-carbon double bonds in the ring structure, said carbon-carbon double bounds and carbonyl carbon-oxygen double bonds in the ring structure, said carbon-carbon double bonds and carbonyl carbon-oxygen double bonds being conjugated with respect to each other. Where more than one ring is present in the unsubstituted quinone, the rings may be fused, non-fused, or both: non-fused rings may be bound by a direct carbon-carbon double bond or by a hydrocarbon radical having conjugated unsaturation such as -C=C-C=C-.

Substituted quinones are also within the scope of the present invention. The degree of substitution; where substitution is desired, may be from one to the maximum number of replaceable hydrogen atoms. **Exemplary of the** various substituents that may be present on the unsubstituted quinone structures include halogen (e.g. chlorine, bromine, **fluorine**, etc.), hydrocarbon radicals including branched and unbranched, saturated and unsaturated alkyl, aryl, alkyl aryl and cycloalkyl radicals and halogenated derivatives thereof; and similar hydrocarbons having hetero atoms therein, particularly oxygen, sulfur, or phosphorous and wherein the same connects the radical to the quinone ring (e.g. oxygen link).

**Exemplary** of the various quinones there may be given 1,2- and 1,4-benzoquinone; 2,6-diphenyl quinone; tetramethyldiquinone; 2,2'- and 4,4'-diphenoquinone; 1,2-, 1,4- and 2,6-naphthoquinone; chloranils; 2-chloro- 1,4-benzoquinone; 2,6-dimethyl benzoquinone and the like.

Organosilane compounds (e) suitable as compatibilizing agents are characterized as having in the molecule (a) at least one silicon atom bonded to a carbon through an oxygen link and (b) at least one carbon-carbon double bond or carbon-carbon triple bond and/or a functional group selected from the group consisting of an amine group or a mercapto group provided that the functional group is not directly bonded to the silicon atom.

In such compounds, the C-O-Si component is generally present as an alkoxyl or acetoxy group bonded directly to the silicon atom, wherein the alkoxy or acetoxy group generally has less than 15 carbon atoms and may also contain hetero atoms (e.g. oxygen). Additionally, there may also be more than one silicon atom in the compound, such multiple silicon atoms, if present, being linked through an oxygen link (e.g. siloxanes), a silicon bond; or a bifunctional organic radical (e.g. methylene or phenylene groups).

Examples of suitable organosilane compounds include: gamma amino propyltriethoxy silane, 2-(3-cyclohexanyl)ethyl trimethoxy silane; 1,3-divinyl tetraethoxy silane; vinyl tris-(2-methoxyethoxy)silane; 5-bicycloheptenyl triethoxy silane and gamma mercapto propyl trimethoxy silane.

Polyfunctional compounds (f) which may be employed as compatibilizer in the practice of the present invention are of three types. The first type of polyfunctional compounds are those having in the molecule both (a) a carbon-carbon double bond or a carbon-carbon triple bond and b) at least one carboxylic acid, anhydride, amide, ester, imide, amino, epoxy, orthoester, or hydroxy group. Examples of such polyfunctional compounds include maleic acid; maleic anhydride; fumaric acid; glycidyl acrylate, itaconic acid; aconitic acid, maleimide; maleic hydrazide; reaction products resulting from a diamine and maleic anhydride, maleic acid, fumaric acid, etc.; dichloro maleic anhydride; maleic acid amide; unsaturated dicarboxylic acids (e.g. acrylic acid, butenoic acid, methacrylic acid, t-ethylacrylic acid, pentenoic acid); decenoic acids, undecenoic acids, dodecenoic acids, linoleic acid, etc.); esters, acid amides or anhydrides of the foregoing unsaturated carboxylic acids; unsaturated alcohols (e.g. alkyl alcohol, crotyl alcohol, methyl vinyl carbinol, 4-pentene-1-ol, 1,4-hexadiene-3-ol, 3-butene- 1,4-diol, 2,5-dimethyl-3-hexene-2,5-diol and alcohols of the formula CₙH_{2n - 5}OH, CₙH_{2n - 7}OH and CₙH_{2n - 9}OH, wherein n is a positive integer up to 30), unsaturated amines resulting from replacing from replacing the -OH group(s) of the above unsaturated alcohols with NH₂ groups; and functionalized diene polymers and copolymers. Of these, two of the preferred compatibilizing agents for compositions of the present invention are maleic anhydride and fumaric acid.

The second group of polyfunctional compatibilizer compounds suitable for use herein are charaterized as having both (a) a group represented by the formula (OR) wherein R is hydrogen or an alkyl, aryl, acyl or carbonyl dioxy group and (b) at least two groups each of which may be the same or different selected from carboxylic acid, acid halide, anhydride, acid halide anhydride, ester, orthoester, amide, imido, amino, and various salts thereof. Typical of this group of compatibilizers are the aliphatic polycarboxylic acids, acid esters and acid amides represented by the formula:

(R^{I}O)ₘR(COOR^{II})ₙ(CONR^{III}R^{IV})ₛ

wherein R is a linear or branched chain, saturated aliphatic hydrocarbon of from 2 to 20, preferably 2 to 10, carbon atoms; R^{I} is selected from the group consisting of hydrogen or an alkyl, aryl, acyl or carbonyl dioxy group of 1 to 10, preferably 1 to 6, most preferably 1 to 4, carbon atoms, especially preferred is hydrogen; each R^{II} is independently selected from the group consisting of hydrogen or an alkyl or aryl group from 1 to 20 carbon atoms, preferably from 1 to 10 carbon atoms; each R^{III} and R^{IV} is independently selected from the group consisting essentially of hydrogen or an alkyl or aryl group of from 1 to 10, preferably from 1 to 6, most preferably 1 to 4, carbon atoms; m is equal to 1 and (n + s) is greater than or equal to 2, preferably equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III} and R^{IV} cannot be aryl when the respective substituent has less than 6 carbon atoms.

Suitable polycarboxylic acids include, for example, citric acid, malic acid, and agaricic acid; including the various commercial forms thereof, such as for example, the anhydrous and hydrated acids. Of these, citric acid is another of the preferred compatibilizing agents. Illustrative of esters useful herein include, for example, acetyl citrate and mono- and/or distearyl citrates and the like. Suitable amides useful herein include, for example, N,N'-diethyl citric acid amide; N-phenyl citric acid amide; N-dodecyl citric acid amide; N,N'-didodecyl citric acid amide and N-dodecyl malic acid present invention. Especially preferred derivates are the salts thereof, including the salts with amines and/preferably, the alkali and alkaline metal salts. Examplary of suitable salts include calcium malate, calcium citrate, potassium malate, and potassium citrate.

The third group of polyfunctional compatibilizer compounds suitable for use herein are characterized as having in the molecule both (a) an acid halide group, most preferably an acid chloride group and (b) at least one carboxylic acid, anhydride, ester, epoxy, orthoester, or amide group, preferably a carboxylic acid or anhydride group. Examples of compatibilizers within this group include trimellitic anhydride acid chloride, chloroformyl succinic anhydride, chloro formyl succinic acid, chloroformyl glutaric anhydride, chloroformyl glutaric acid, chloroacetyl succinic anhydride, chloroacetylsuccinic acid, trimellitic acid chloride, and chloroacetyl glutaric acid. Among these, trimellitic anhydride acid chloride is preferred. Furthermore, it is especially preferred that compatibilizers of this group be prereacted with at least a portion of the polyphenylene ether whereby the compatibilizing agent is a PPE-functionalized compound.

The foregoing compatibilizing agents are more fully described in U.S. Pat. Nos. 4,315,086; 4,600,741; 4,642,358; 4,826,933; 4,927,894; 4,980,424; 5,041,504; and 5,115,042.

The foregoing compatibilizing agents may be used alone or in various combinations of one another with another. Furthermore, they may be added directly to the melt blend or pre-reacted with either or both the PPE and polyamide, as well as with other resinous materials employed in the preparation of the compositions of the present invention. With many of the foregoing compatibilizing agents, particularly the polyfunctional compounds, even greater improvement in compatibility is found where at least a portion of the compatibilizing agent is pre-reacted, either in the melt or in a solution of a suitable solvent, with all or a part of the PPE. It is believed that such prereacting may cause the compatibilizing agent to react with the polymer and, consequently, functionalize the PPE as noted above. For example, the PPE may be pre-reacted with maleic anhydride to form an anhydride functionalized PPE which has improved compatibility with the polyamide compared to a non-functionalized PPE.

Where the compatibilizing agent is employed in the preparation of the compositions of the present invention, the initial amount used will be dependent upon the specific compatibilizing agent chosen and the specific polymeric system to which is added.

It is possible to use in the composition according to the invention any other known compatibilization system. Other systems have been described for example in U.S. Pat. No. 4,866,114.

The present compositions also contain an alkylene-alkyl (meth)acrylate copolymer comprising at least two moieties selected from the group consisting of carboxylic acid, anhydride, epoxy, oxazoline, and orthoester. The alkylene groups preferably has from 2 to about 6 carbon atoms and the alkyl group of the alkyl (meth)acrylate generally has about 1 to about 8 carbon atoms. This type of polymer can be prepared by copolymerizing an olefin, for example, ethylene and propylene, with various (meth)acrylate monomers and/or various maleic-based monomers. The term (meth)acrylate refers to both the acrylate as well as the corresponding methacrylate analogue. Included within the term (meth)acrylate monomers are alkyl (meth)acrylate monomers as well as various (meth)acrylate monomers containing at least one of the aforementioned reactive moieties.

In a preferred embodiment, the copolymer is derived from ethylene, propylene, or mixtures of ethylene and propylene, as the alkylene component; butyl acrylate, hexyl acrylate, or propyl acrylate as well as the corresponding alkyl (methyl)acrylates, for the alkyl (meth)acrylate monomer component, with acrylic acid and maleic anhydride as monomers providing the two reactive moieties (i.e., carboxylic acid and anhydride).

The olefin content in the copolymer can be from about 40 to about 90 percent by weight, preferably from about 50 to about 70 percent by weight, based upon the weight of the copolymer. The (meth)acrylate monomer content in the copolymer can be from about 10 to about 60 percent by weight, preferably from about 30 to about 50 percent by weight, based upon the weight of the copolymer. The (meth)acrylate monomers that contain the reactive moieties are generally in the copolymer from about 0.1 to about 15 percent by weight, preferably from about 0.5 to about 10 percent by weight, and more preferably from about 1.0 to about 8 percent by weight, based upon the weight of the copolymer.

The amount of the aforementioned alkylene-alkyl (meth)acrylate copolymer can vary widely in the compositions of the present invention, however, the range is generally from about 1 to about 15 percent by weight, preferably from about 2 to about 8 percent by weight based upon the weight of the entire composition. A preferred amount is that which will result in compositions that exhibit a deformation of more than 10 mm, preferably more than 12 mm, when a plaque is impacted at -30°C by a falling dart in accordance with ISO 6603-2. It is also preferred that the amount of the aforementioned alkylene-alkyl (meth)acrylate copolymer be that which will result in compatibilized PPE-polyamide compositions having an energy at break of greater than 40 J, preferably greater than 50 J and even more preferably greater than about 60 J, when a plaque is impacted at -30°C by a falling dart in accordance with ISO 6603-2. In an especially preferred embodiment, the compositions of the present invention will have an energy at break of greater than 40 J with a deformation of more than 10 mm, more preferably have an energy at break of greater than 50 J with a deformation of more than 12 mm, and most preferably have an energy at break of greater than 60 J with a deformation of more than 12 mm, when a plaque is impacted at -30°C by a falling dart in accordance with ISO 6603-2.

In a preferred embodiment, the alkylene-alkyl (meth)acrylate copolymer is derived from ethylene, butyl acrylate, acrylic acid, and maleic anhydride wherein the ethylene content is from about 55 to about 65 percent, the butyl acrylate is from about 30 to about 40 percent, the acrylic acid is from about 3 to about 7 percent, and the maleic anhydride is from about 0.08 to about 0.5 percent by weight, wherein all weights are based upon the weight of the copolymer. In an especially preferred embodiment, the alkylene-alkyl (meth)acrylate copolymer is derived from ethylene, butyl acrylate, acrylic acid, and maleic anhydride wherein the butyl acrylate is between about 32-36 35 percent, the acrylic acid is between about 4.8-5.8 percent, and the maleic anhydride is between about 0.55-0.75 percent by weight, with the remainder derived from ethylene, and wherein all weights are based upon the weight of the copolymer.

It is possible to incorporate in the composition according to the invention one or more additional impact modifiers. All impact modifiers as generally used for compositions comprising a polyphenylene ether, a polyamide or a combination of a polyphenylene ether and a polyamide can be used. Particularly suitable are the so called block copolymers, for example, triblock copolymers and diblock copolymers. The diblock and triblock copolymer rubber additives which may be used are thermoplastic rubbers comprised of one or two alkenyl aromatic blocks which are typically styrene blocks and a rubber block, e.g., a butadiene block which may be partially hydrogenated. Mixtures of these triblock copolymers and diblock copolymers are especially useful in the present compositions.

When a combination of at least one block copolymer and the alkylene-alkyl (meth)acrylate copolymer comprising at least two moieties selected from the group consisting of carboxylic acid, anhydride, epoxy, oxazoline, and orthoester is utilized, it is believed that dual-phase impact modification is possible. By dual-phase impact modification is meant that both the PPE phase and the polyamide resin phase each contain an impact modifier. It is believed that the moieties on the alkylene-alkyl (meth)acrylate copolymer react with the polyamide resin in a fashion similar to that previously described for the compatibilizing agents to provide a copolymer between the alkylene-alkyl (meth)acrylate copolymer and the polyamide resin.

A variety of useful compatibilized PPE-polyamide compositions can be provided which include varying amount of the various impact modifiers (i.e., the alkyl (meth)acrylate copolymer comprising at least two reactive moieties selected from the group consisting of carboxylic acid, anhydride, epoxy, oxazoline, and orthoester; in addition to the block copolymer or copolymers). Typically, the combined level of impact modifiers will be from about 1 to about 30 percent by weight, preferably from about 2 to about 18 percent by weight based upon the weight of the entire composition with the amount of the (meth)acrylate copolymer as previously described.

The thermoplastic composition of the invention may comprise any of the following additives: reinforcing fibers, fillers, conductive carbon black, carbon fibers and carbon fibrils, stabilizers, dyes, pigments, polyolefins, and flame retardants.

All patents and patent applications cited are incorporated herein by reference.

The invention will be further illustrated by the following examples.

### EXPERIMENTAL

In the examples the following materials have been used:
PPE: a poly(2,6-dimethyl-1,4-phenylene ether) with an intrinsic viscosity of 45 ml/g as measured in toluene at 25°C. and a concentration of 0.6 gram per 100 ml;
PA: a polyamide-6,6 with a reduced viscosity of 145 ml/ g as measured in sulphuric acid in accordance with ISO 307;
CA: citric acid;
SEBS: polystyrene-poly(ethylene-butylene)-polystyrene block copolymer;
SEP: polystyrene-poly(ethylene-propylene) block copolymer;
EPDM-MAH: ethylene-propylene-diene copolymer rubber containing 0.6% by weight grafted maleic anhydride; and
EBA-AA-MAH: copolymer of ethylene, butyl acrylate, acrylic acid, and maleic anhydride in a 60:35:4.8:0.2 weight ratio.

The ingredients were compounded in the weight ratios as indicated in the following table in a twin-screw extruder with temperature settings over the length of the extruder between about 280 and about 310° C. The screw speed was 300 rpm, the throughput 10 kilograms per hour. All ingredients with exception of the polyamide were fed at the throat of the extruder; the polyamide was fed downstream about halfway the extruder. The strands coming from the extruder were pelletized in a laboratory equipment and dried for about 3 hours at about 110°C. The dried pellets were injection molded into standard ISO test specimens for measurement of physical properties.

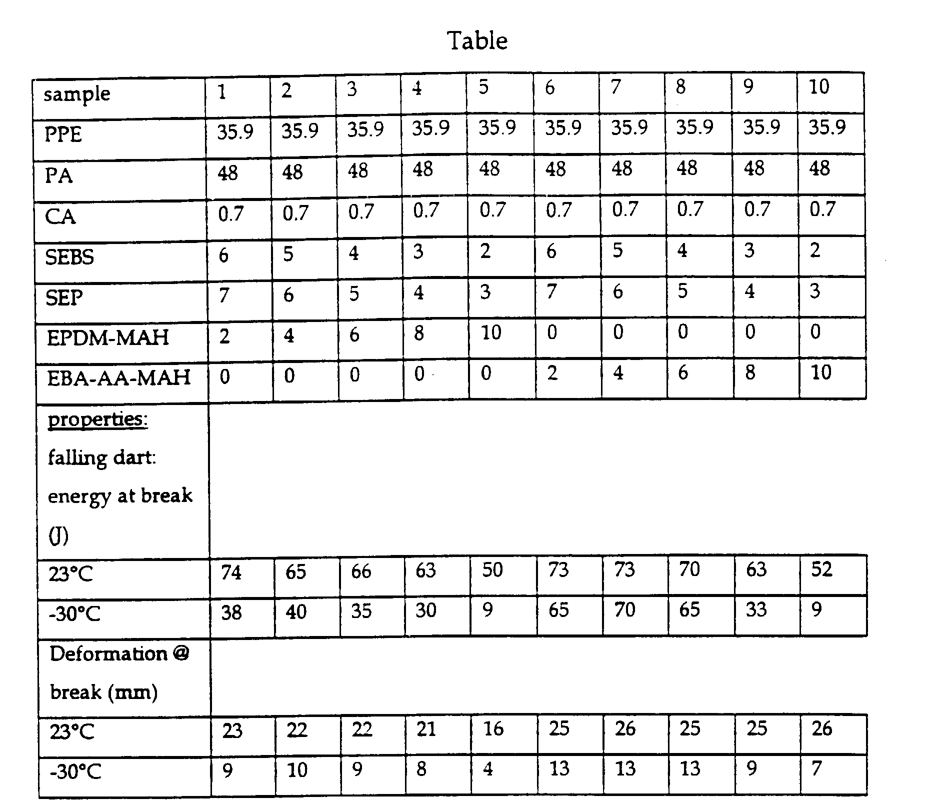

As can be seen from the results of the table, the compositions containing an alkylene-alkyl (meth)acrylate copolymer comprising at least two moieties selected from the group consisting of carboxylic acid, anhydride, epoxy, oxazoline, and orthoester exhibit markedly improved energy at break and deformation, especially at low temperature, than compositions containing an impact modifier containing only a single reactive group. For example, comparison of sample 6 to sample 1 shows that the energy at break for sample 6 is unexpectedly 1.7 times that of sample 1 when measured at -30°C. The deformation for sample 6 is also unexpectedly more than 1.4 times the deformation of sample 1 when measured at -30°C. Similar unexpected results were obtained for compositions containing up to about 8 percent by weight of the alkylene-alkyl (meth)acrylate copolymer comprising at least two moieties selected from the group consisting of carboxylic acid, anhydride, epoxy, oxazoline, and orthoester as compared to an impact modifier containing only a single reactive moiety.

## Claims

1. A thermoplastic composition comprising:
(a) a compatibilized polyphenylene ether-polyamide resin blend, and
(b) an alkylene-alkyl (meth)acrylate copolymer comprising at least two moieties selected from the group consisting of carboxylic acid, anhydride, epoxy, oxazoline, and orthoester; wherein the alkylene-alkyl (meth)acrylate copolymer is present from about 1 to about 15 percent by weight based upon the weight of the entire composition.

2. A composition as in claim 1, wherein the alkylene-alkyl (meth)acrylate copolymer is a copolymer of ethylene, butyl acrylate, acrylic acid, and maleic anhydride monomers.

3. A composition as in claim 1, wherein the alkylene-alkyl (meth)acrylate copolymer is present from about 2 to about 8 percent by weight based upon the weight of the entire composition.

4. The composition as in claim 1, further comprising at least one block copolymer of the group consisting of triblock copolymers and diblock copolymers.

5. The composition as in claim 1, having an energy at break of greater than 40 J when a plaque is impacted at -30°C by a falling dart in accordance with ISO 6603-2.

6. The composition as in claim 1, having a deformation of more than 10 mm when a plaque is impacted at -30°C by a falling dart in accordance with ISO 6603-2.

7. The composition as in claim 1, wherein the compatibilized polyphenylene ether-polyamide resin blend is compatibilized with a compatibilizing agent selected from the group consisting of maleic anhydride, fumaric acid, citric acid, malic acid, and reaction products of a polyphenylene ether and trimellitic anhydride acid chloride.

8. The composition as in claim 1, further comprising an additive selected from the group consisting of reinforcing fibers, fillers, conductive carbon black, carbon fibers and carbon fibrils, stabilizers, dyes, pigments, polyolefins, flame retardants, and mixtures thereof.
